Europäisches Patentamt

European Patent Office

Office européen des brevets

(19)

(11) Publication number: **0 411 878 A2**

# EUROPEAN PATENT APPLICATION

(21) Application number: 90308367.3

(22) Date of filing: 30.07.90

(51) Int. Cl.5: **H04Q 7/04**, H04B 7/005,
H04B 7/26

(30) Priority: 03.08.89 GB 8917740

(43) Date of publication of application:
06.02.91 Bulletin 91/06

(84) Designated Contracting States:
DE FR IT

(71) Applicant: ORBITEL MOBILE
COMMUNICATIONS LIMITED
Western Road
Bracknell, Berkshire(GB)

(72) Inventor: Marley, Neil
52 Newtown Road
Newbury, Berkshire RG14 7BT(GB)

(74) Representative: Foster, David Martyn et al
MATHISEN MACARA & CO. The Coach
House 6-8 Swakeleys Roadoad
Ickenham Uxbridge UB10 8BZ(GB)

(54) Power control arrangement for a radio communication system.

(57) A power control arrangement for a radio communication system including at least one base station (3) and a number of mobile stations (1) is described. The arrangement includes a number of transmission channels each being assigned a different predetermined transmitter power level. A channel re-assignment processor (9) is arranged to assign or re-assign channels to calls on the basis of the transmitter power level most appropriate to prevailing transmission conditions.

Fig.2.

EP 0 411 878 A2

## POWER CONTROL ARRANGEMENT FOR A RADIO COMMUNICATION SYSTEM

The present invention relates to a power control arrangement for a radio communication system. In particular the invention relates to a power control arrangement for a radio communication system employing a cellular arrangement, each cell being an area covered by a base station to which is allocated a proportion of the total available radio channels.

When a particular mobile station establishes a connection or call, the base station assigns a channel for the duration of that call from the allocation of channels for that cell. Movement of the mobile station during a call can, in some systems, result in a "hand-over" of the call to a channel in an adjacent cell.

Many systems employ a system of cellular re-use of available channels whereby each base station has an allocation of channels available for use within its own coverage area or cell, with those channels not being re-used in any other cell closer than a minimum re-use distance.

The re-use distance is generally determined on the basis of the tolerance of the transmission system to common-channel interference before unacceptable performance results, the transmitter powers employed by the base station and the mobile station, and the general radio propagation conditions. The efficiency of use of the frequency spectrum available to the system is highly dependent on the re-use distance, the smaller the distance the higher the potential efficiency of the system.

Many existing systems employ a power control arrangement on either or both of the base station and the mobile station transmitters to control the transmitter output power during a connection or call. The aim of such an arrangment is to utilise the transmitter power most appropriate to the given radio link quality, this being largely determined by the mobile station to base station distance and propagation environment, rather than the transmitter simply operating at the maximum power necessary for a mobile station at maximum range.

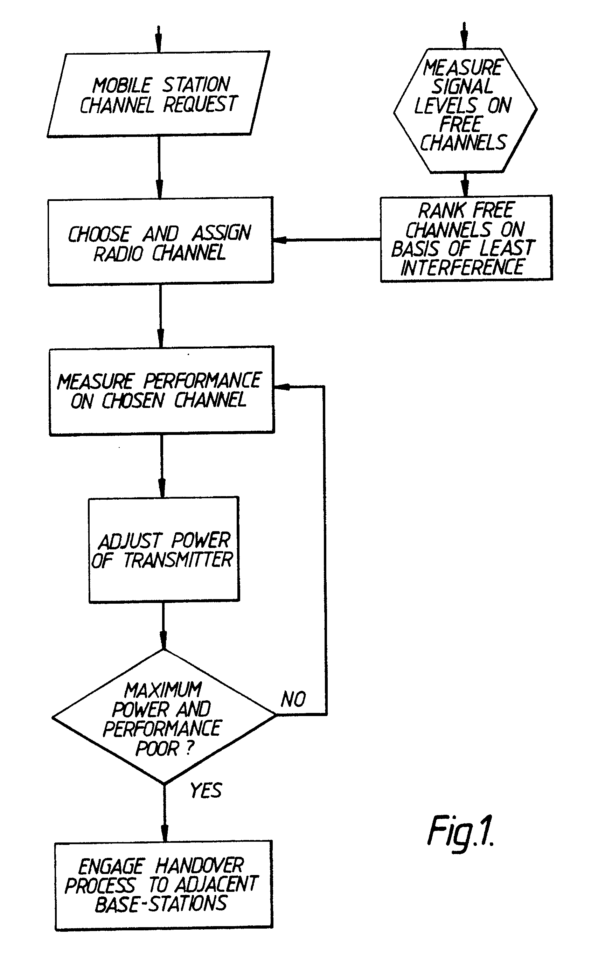

One such existing power control arrangement will now be described with reference to Figure 1 of the accompanying drawings which is a flow chart illustrating the operation of the arrangement.

Referring to Figure 1, in the existing power control arrangement when a mobile station requests a channel by means of an access signal, apparatus within the associated base station measures the signal levels on the free channels available within the channels allocated to the station. These available free channels are then ranked on the basis of least interference, and the free channel with the lowest interference assigned to the mobile station. The transmission performance in the chosen channel is monitored at the base station, and the power of the transmitted signal from the base station adjusted accordingly. If the power of the transmitter has to be increased to maximum power, "hand-over" of the call to a channel in an adjacent base station will take place.

Thus in such an existing arrangement the transmitter output power level employed for a particular call, which is determined on the basis of measured received signal strengths or other parameters, can either be set at the beginning of the call or adjusted during the call, or both.

It will be seen that using such a power control arrangement the average transmitter powers employed per channel will generally be reduced compared to a transmitter transmitting at a continuous power level, and as a result the general level of interference experienced in the adjacent common-channel cells will be lower. The reduction in interference resulting from this technique will generally be a function of the distribution of "ideal" required transmitter powers as a function of the distribution of mobile station to base station distances.

This reduction in average interference levels can be employed by the system operator to either offer improved performance on the system, or to reduce the re-use distance and to improve spectrum efficiency of the system.

The above power control arrangement suffers the disadvantage, however, that there is a random association between channels and transmitter powers used for particular calls. This limits the reduction in interference levels which is practically achievable. Furthermore, the equipment needed to continuously monitor the signal levels on free channels, and to rank the free channels on the basis of least interference, is generally relatively complex.

It is an object of the present invention to provide a power control arrangement for a radio communication system which is less complex and therefore cheaper to produce than existing arrangements, and which in operation is capable of providing reduced common channel interference.

According to the present invention there is provided a power control arrangement for a radio communication system including at least one base station and a number of mobile stations, said arrangement comprising a plurality of transmission channels for transmitting calls between the base station and the mobile stations, each channel being assigned one of a plurality of different predetermined transmitter output power levels, and an assigning means arranged to assign or re-assign

2

channels to calls on a basis of the transmitter output power level most appropriate to prevailing transmission conditions.

An arrangement according to the present invention results in reduced common channel interference within the system, with a resulting potantial for improved spectrum efficiency and potential reduction in equipment complexity in the base station.

One embodiment of the present invention will now be described, by way of example only, with reference to the accompanying drawings of which:

Figure 1 is a flow chart illustrating the operation of a known power control arrangement as has already been described;

Figure 2 is a block schematic diagram of a radio communication system incorporating a power control arrangement in accordance with tle embodiment of the invention, and

Figure 3 is a flow chart illustrating the operation of a power control arrangement shown in Figure 2.

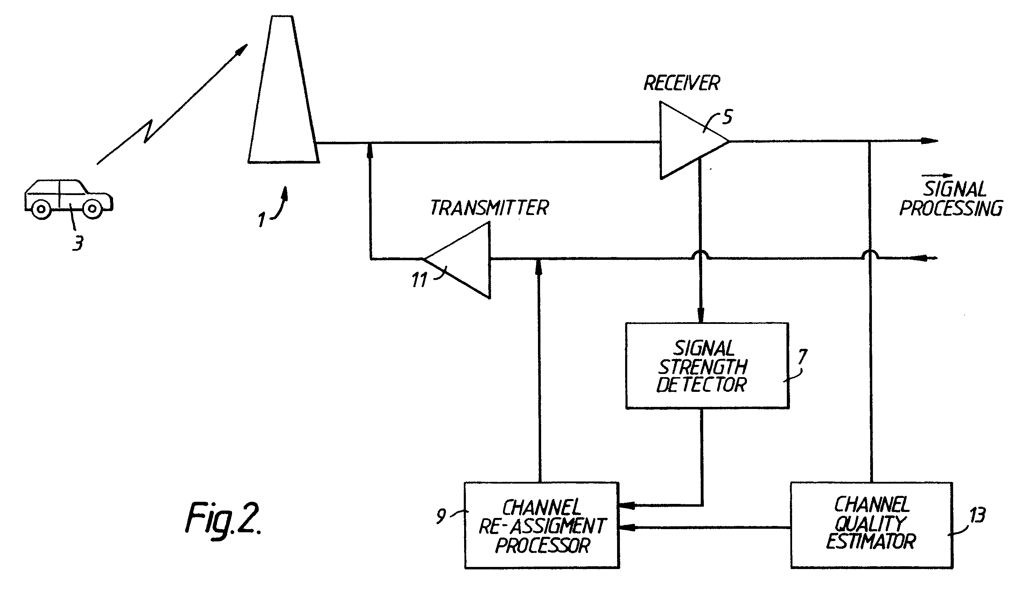

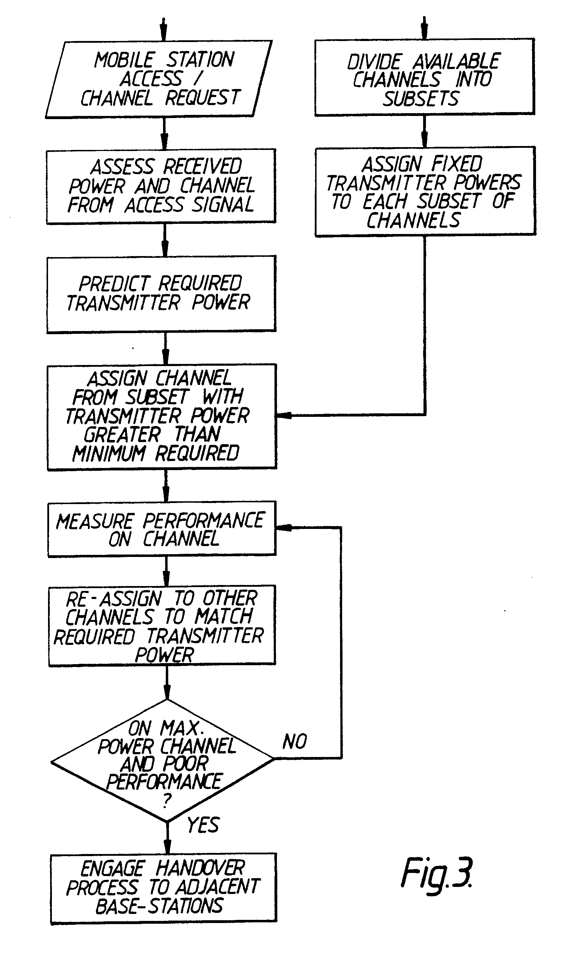

Referring firstly to Figure 2, the radio communication system to be described includes a base station 1 and a set of mobile stations 3 in the form of cellular radio telephones only one such mobile station being shown. The base station 1 includes a receiver 5 for receiving signals emitted from the mobile stations 3, the signals from the receiver being passed to further processing apparatus (not shown) which determines the necessary routing of the call. An output from the receiver 5 is also connected to a signal strength detector unit 7 arranged to detect the level of the received signal. A channel re-assignment processor 9 is responsive to the output of the signal strength detector to re-assign a channel to the mobile station 3 as will be described in more detail hereafter, a transmitter 11 transmitting appropriate signals to the mobile station 3 via the new channel. A channel quality estimator 13 responsive to the output of the receiver 5 provides a further input to the channel re-assignment processor 9

Referring now also to Figure 3 in the embodiment of the invention the allocation of channels available within a given cell is divided into groups or subsets of channels at the system planning stage. Each group of channels is matched to a particular transmitter output power level which will be used for all connections/calls made on channels within that group. The relative number of channels within each group and the power assigned to that group is a function of the fraction of the mobile stations 3 within the cell which can satisfactorily be supported by that number of channels at that power level, e.g. the group operating at the highest transmitter power is likely to be suitable for a higher proportion of mobile stations 3 than the groups at lower power levels, and therefore will have a proportionately higher number of channels in the group.

Thus, in use of the system, where the mobile station 3 sends an access signal requesting a channel, the signal strength detector 7 assesses the power of the received signal If, however, the transmitted power is within the capability of the transmitter 11, the unit 9 assigns a channel to the signal from the subset having a power greater than the minimum required for the signal. The performance of the signal within this channel is monitored by the signal strength detector 7 and channel quality estimator and, if necessary, the unit 9 causes the call to be re-assigned to another channel which matches the required power.

If, however, the channel is already on maximum power and has a poor performance as determined by the channel quality estimator 13, the "hand-over" process is engaged to transfer the call to an adjacent base station.

The assignment of a particular channel to a particular call thus is determined by the transmitter output power most appropriate to that connection, or to a higher transmitter output power if no channels are available in the 'correct' group at that instant. During a call, as propagation conditions alter, for example due to the movement of one of the mobile stations 3, the matching of a given call to the most appropriate transmitter output power level can be maintained by the channel re-assignment procesor 9 re-assigning the call to a channel in another group within the same cell. Hand-over to a channel in another cell may still occur at the cell edge, this being from that channel group within the original cell operating at the highest power level for that cell.

Thus, all of the allocated channels within a cell at a base station operate at predetermined transmitter output power levels. This has a two-fold advantage:

Firstly, the transmitting equipment at the base station 1 does not need to be capable of output power adjustment on a dynamic, that is continuous basis. There is thus a potential saving in equipment complexity.

Secondly, there is now a fixed relationship between a channel and the transmitter power which may be employed for that channel, this being determined by the group which the channel is placed in. Thus the re-use distance employed for those channel groups operating at less than maximum pwer may be reduced i.e. different re-use distances may be employed for different channel groups within the allocated set of channels for a particular cell station, with a commensurate improvement in system spectrum efficiency.

## Claims

1. A power control arrangement for a radio communication system including at least one base station (1) and a number of mobile stations (3), said arrangement comprising a plurality of transmission channels for transmitting calls between the base station (1) and the mobile stations (3), the arrangement being characterised in that each channel is assigned one of a plurality of different predetermined transmitter output power levels, an assigning means (9) being arranged to assign or re-assign channels to calls on a basis of the transmitter output power level most appropriate to prevailing transmission conditions.

2. An arrangement according to claim 1 in which the assigning means (9) is responsive to the strength of signals transmitted by the mobile stations to determine the most appropriate transmitter power level.

3. An arrangement according to either of the preceding claims in which the assigning means (9) is responsive to an indication of the channel quality of signals transmitted by the mobile stations (3) to determine the most appropriate transmitter level.

4. An arrangement accordirg to any one of the preceding claims including means (7,13) for determining whether calls should be transferred to an adjacent base station on the basis of the most appropriate transmitter output power level.

5. An arrangement according to any one of the preceding claims in which the plurality of transmission channels are arranged in groups, the channels within each group being allocated a particular transmitter output power level.

6. An arrangement according to claim 5 in which a higher proportion of channels are allocated the highest transmitter output power level than are allocated the lower transmitter output power levels.

7. An arrangement according to any one of the preceding claims in which different re-use distances are used for different ones of the predetermined transmitter output power levels.

8. A radio communication., system characterised in that it includes a power control arrangement as claimed in any one of claims 1 to 7.

MOBILE STATION
CHANNEL REQUEST

MEASURE
SIGNAL
LEVELS ON
FREE
CHANNELS

CHOOSE AND ASSIGN
RADIO CHANNEL

RANK FREE
CHANNELS ON
BASIS OF LEAST
INTERFERENCE

MEASURE PERFORMANCE
ON CHOSEN CHANNEL

ADJUST POWER
OF TRANSMITTER

MAXIMUM
POWER AND
PERFORMANCE
POOR ?

NO

YES

ENGAGE HANDOVER
PROCESS TO ADJACENT
BASE-STATIONS

Fig.1.

Fig.2.

SIGNAL PROCESSING

RECEIVER

5

TRANSMITTER

11

CHANNEL QUALITY ESTIMATOR

13

SIGNAL STRENGTH DETECTOR

7

CHANNEL RE-ASSIGMENT PROCESSOR

9

1

3

Fig.3.